(19) Europäisches Patentamt

European Patent Office

Office européen des brevets

(11) **EP 1 073 251 A2**

(12) **EUROPEAN PATENT APPLICATION**

(43) Date of publication:
**31.01.2001 Bulletin 2001/05**

(51) Int. Cl.[7]: **H04M 11/06**

(21) Application number: **00306184.3**

(22) Date of filing: **20.07.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **26.07.1999 US 360747**

(71) Applicant:
**Texas Instruments Incorporated
Dallas, Texas 75251 (US)**

(72) Inventor: **Lu, Xiaolin
Plano, Texas 75024 (US)**

(74) Representative:
**Potter, Julian Mark
D. Young & Co.,
21 New Fetter Lane
London EC4A 1DA (GB)**

(54) **Packet buffer management**

(57) A method for processing message data packets in a digital subscriber line access multiplexer (DSLAM), for use in a digital subscriber line communications network. The DSLAM includes a DSLAM controller, which may be realized as a single-chip digital signal processor having its own on-chip random access memory (RAM). Flow control operations are carried out by the DSLAM controller by pre-allocating a portion of its RAM as a packet buffer memory pool, comprised of a selected plurality of minimum-size memory blocks. Each received message data packet causes the allocation 54 of a packet buffer within memory pool as a data structure having a valid data pointer and a data size value. Sufficient memory space is allocated for the packet buffer payload and its expected protocol headers and tails; if necessary, the packet buffer may be allocated in the memory pool by way of a linked list of packet buffer entries. The message data packet is processed through a series of protocols 58, 59, 60, both to and from the application level, by adding, deleting, and modifying header and tail information, primarily by modification of the valid data pointer and data size value fields, and without recopying the message data itself. De-allocation 70 of the packet buffer is carried out so as to automatically merge contiguous non-allocated memory blocks with one another, thus avoiding fragmentation of the memory pool.

FIG. 1

EP 1 073 251 A2

**Description**

This invention is in the field of data communications, and is more particularly directed to control of multiplexed multiple-channel communications in a multiple protocol environment.

In recent years, the data rates at which communications are carried out over conventional telephone networks and wiring have greatly increased. These increases are due, in large part, to newly adopted techniques of multiplexing and modulating signals representative of the messages or data being communicated, resulting in greatly improved communication bandwidth. In addition, the carrier frequencies at which such communications are being carried out have also increased in recent years, further improving the bit rate.

These higher data rates are achieved in one relatively new type of current modem communications technology, referred to in the art as digital subscriber line ("DSL"). DSL refers generically to a public network technology that delivers relatively high bandwidth over conventional telephone company copper wiring, generally at limited distances. DSL has been further separated into several different categories of technologies according to specific expected data transfer rates, the types and lengths of the medium over which data are communicated, and schemes for encoding and decoding the communicated data. According to this technology, data rates between DSL modems may be far greater than current voice modem rates. Indeed, current DSL systems operate (or are projected to operate) at data rates ranging from on the order of 500 Kbps to 18 Mbps or higher. According to certain conventional techniques, such as the protocol referred to as Asymmetric Digital Subscriber Line (ADSL) and which corresponds to ANSI standard T1.413, the data communication rates are asymmetrical. Typically, the higher rate is provided for so-called downstream communications, that is from the telephone network central office to the customer modem, with upstream communication from the customer modem to the central office having a data rate considerably lower than the downstream rate.

An integral part of a DSL communications network is referred to in the art as the Digital Subscriber Line Access Multiplexer, or "DSLAM". DSLAMs are typically located at a central office of the telephone network, and include multiple DSL modem ports into which client modems may connect. The primary function of a DSLAM is to multiplex client data communications from its multiple DSL modem ports into a network, such as a LAN which may include a server and an Internet gateway; return data communications from the network are also demultiplexed by the DSLAM for communication to the clients via the DSL ports.

Conventional DSLAMs are typically realized by way of multiple line cards, each of which supports one or more DSL ports. The communications received at the DSL ports are typically in packet form, each having headers or tails (or both) containing the appropriate routing information for the packet message. A DSLAM controller function performs the appropriate framing and data formatting by way of which the packets received at the DSL ports are conveyed, according to the appropriate protocols, to a network interface card (NIC) in the DSLAM and thus to the network.

Typical DSLAMs are required to handle multiple protocols, given the wide range of network communications that can be carried out over the network. These protocols include point-to-point protocol (PPP), Internet protocol (IP), address resolution protocol (ARP), Simple Network Management Protocol (SMNP), and others. In its multiplexing and handling of DSL communications, both as received from and also to be transmitted over the DSL ports, the DSLAM may be required to format and reformat a given packet into multiple ones of these protocols. Because each of these processes may modify, append, or delete a packet header or tail from each packet, conventional DSLAMs operate by repeated reading and rewriting of memory blocks containing the packets.

The memory and processing resources required for packet processing in this conventional manner can be quite substantial, considering the number of memory copies that are generated by the DSLAM. The memory resources required refers to the memory capacity that must be made available to store the various copies, while the processing resources required refer to the number of operations (and cycles) that must be performed by the processor in order to write and read the copies. One may estimate the number N of memory copies to be performed by a DSLAM processor controlling multiple DSL ports or channels, for the case of one packet from each of the multiple DSL ports, as follows:

$$N = (2n + A + 1)*C$$

where C is the number of DSL ports or channels controlled by the DSLAM processor, where n is the number of protocols through which each packet is processed by the DSLAM (the multiplier of 2 accounting for both upstream and downstream communications), and where A is the number of memory copies by the various applications executed by the DSLAM; the additional copy (i.e., the "1" in the equation) represents a copy of the packet from the receive buffer to the send buffer in the DSLAM. Even for a simple system utilizing two protocols with no additional copies required by a DSLAM application, five copies are required of each packet for each DSL channel in the DSLAM. Considering that the number of DSL channels to be handled by a DSLAM can be quite large, and also considering the packet data rates of modern DSL communications, the memory and processing resources required for this conventional DSLAM arrangement becomes quite significant. Indeed, the memory space required in this conventional operation generally exceeds the on-chip high-speed memory available in conventional controller processors and thus requiring a memory subsystem within the DSLAM architecture.

The line card functions carried out by conventional DSLAMs now typically use digital signal processors (DSPs), such as the TMS320C5x and TMS320C6x series of DSPs available from Texas Instruments Incorporated, to provide high speed handling of the data communicated by the DSLAM. It is desirable that the controller in the DSLAM also be realized by a similar DSP, in order to eliminate the need for data translation between the line card DSPs and the DSLAM controller (and NIC); indeed, in the case of state-of-the-art DSPs such as the TMS320C6x class, it is conceivable that sufficient processing capacity may be present so that the control function may be carried out by the same DSP as used to handle the line card processing. In order to maintain the highest performance, however, it would be desirable to utilize on-chip memory of the DSPs to handle the packet protocol processing; the substantial memory resources required for copying the packets among the protocols, as described above, precludes the use of on-chip DSP memory for this function, according to conventional realizations.

A first aspect of the present invention provides a digital subscriber line access multiplexer (DSLAM) and method of operating the same in which the memory and processing resources necessary for protocol translation of data packets are minimized.

A second aspect of the present invention provides such a DSLAM and method according to which high-speed on-chip memory may be used for storage of communicated packets during their protocol translation.

A further aspect of the present invention provides such a DSLAM and method according to which the DSLAM controller function may be realized by way of a digital signal processor (DSP).

A yet further aspect of the present invention provides such a DSLAM and method according to which allocation of on-chip memory may be carried out in a manner consistent with the DSP or other controller.

A still yet further aspect of the present invention provides such a DSLAM and method according to which fragmentation of the packet memory resource may be avoided.

Other aspects and advantages of the present invention will be apparent to those of ordinary skill in the art having reference to the following specification together with its drawings.

Embodiments of the present invention may be implemented by way of a packet buffer manager function within a digital subscriber line access multiplexer (DSLAM). The packet buffer manager allocates a contiguous memory block into which data packets and headers may be stored. Each data packet, whether received from the network interface or from a DSL port, is stored in the memory block in a data structure that reserves sufficient space not only for the communicated data but also for future headers and tails for each protocol expected to be applied to the packet. A data offset pointer in the data structure points to the beginning of the actual packet data. Overhead data (headers and tails) may be appended to, modified in, or canceled from, the packet by reference to the various pointers including the data pointer, without copying the data packet itself. Upon transmission, the portion of memory occupied by the block is freed, with contiguous blocks recovered to avoid fragmentation.

Specific embodiments in accordance with the present invention will now be described, by way of example only, and with reference to the accompanying drawings, in which:-

Figure 1 is an electrical diagram, in block form, of a digital subscriber line (DSL) communications network into which the preferred embodiments of the present invention may be implemented.

Figure 2 is an electrical diagram, in block form, of a digital subscriber line access multiplexer (DSLAM) constructed according to the preferred embodiments of the present invention.

Figure 3 is an electrical diagram, in block form, of the architecture of a digital signal processor (DSP) according to which the DSLAM controller of the preferred embodiments of the present invention may be implemented.

Figure 4 is a block diagram illustrating the software architecture under which the DSLAM of Figure 2 operates, according to the preferred embodiments of the present invention.

Figure 5 is a memory map illustrating an arrangement of a memory pool in the on-chip memory in the DSLAM controller of Figure 2 according to the preferred embodiments of the present invention.

Figure 6 is a flow chart illustrating the operation of the DSLAM controller according to the preferred embodiments of the invention.

Figure 7 is a block diagram illustrating an application of the DSLAM controller according to the preferred embodiments of the invention.

Figures 8a through 8c are memory map diagrams illustrating the location of examples of packet buffer entries in the memory pool of Figure 5, according to the preferred embodiments of the invention.

Figures 9a through 9e illustrate the operation of the preferred embodiments of the invention upon a packet buffer in the memory pool, during protocol processing according to the method of Figure 6.

Figure 10 is a memory map illustrating the linked arrangement of packet buffer entries according to the second preferred embodiment of the present invention.

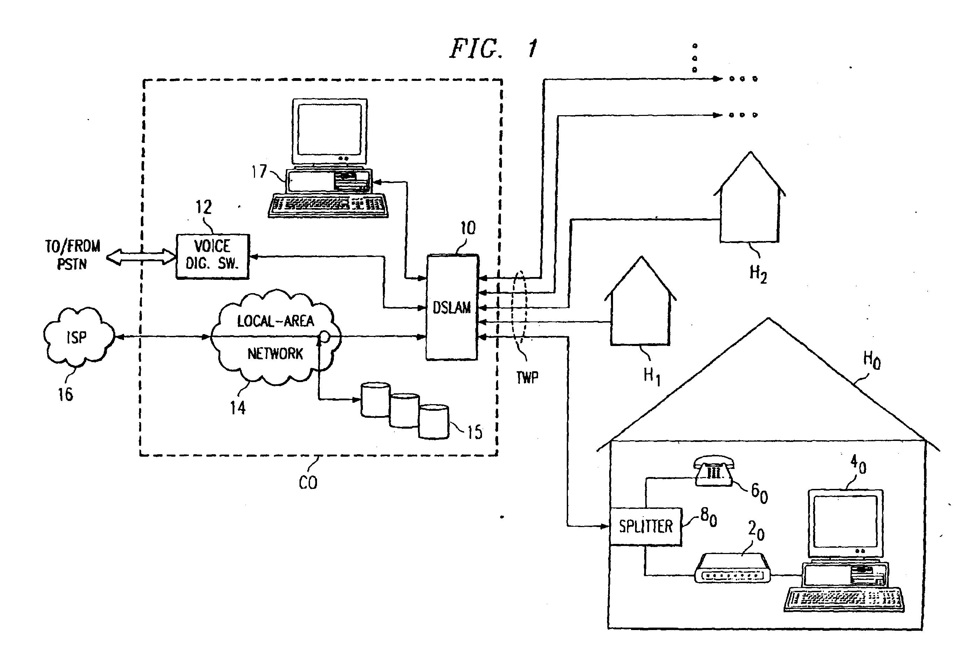

Referring first to Figure 1, a digital subscriber line (DSL) communications network into which the preferred embodiments of the present invention may be implemented will first be described. The preferred embodiments of the invention will be described in connection with a DSL network, as it is contemplated that the present teaching is particularly beneficial when applied to DSL communications; of course, it is to be understood that the present teaching may also have applicability to other types of communications, as will be readily apparent to those skilled in the art having reference to this specification. Further, the particular DSL network of Figure 1 is described herein by way of example only, it being contemplated that those skilled in the art having reference to this specification will be readily able to realize the benefits of the present teaching in DSL networks according to other arrangements and, as noted above, also in data communication according to other technologies.

As shown in Figure 1, a DSL communications network includes multiple client locations H, which may correspond to home or office client locations. In this DSL arrangement, illustrative client location $H_0$ includes a DSL modem $2_0$ which handles communications to and from client computer $4_0$. Telephone handset $6_0$ is connected in parallel with DSL modem $2_0$ to splitter $8_0$ which, as is conventional in the art, provides the appropriate filtering operation to forward voice communications to handset $6_0$ and data communications to DSL modem $2_0$. Splitter $8_0$ is connected to one of local telephone network facilities TWP, each of which may be realized by way of conventional twisted-pair copper wires. Others of client locations H may be similarly constructed, or realized in such other fashion as is known in the art.

The example of Figure 1 corresponds to the type of DSL communications in which analog voice signals travel at a lower frequency than data communications, permitting the simultaneous overlay of the two classes of traffic on the same telephone network facilities. Alternatively, as is known in the art, so-called "splitterless" DSL may be used, in which voice communications are received and converted by the DSL modem into packet communications, and communicated over the telephone network as digital packets, in similar fashion as the data communications. The present teaching may be applied with equivalent benefit to DSL communications according to such splitterless technologies, as well.

In the example of Figure 1, facilities TWP are connected to central office CO either directly, or as a combination of twisted-pair and fiber optic physical facilities, with repeaters and other network elements (not shown) provided as necessary for reliable communication. Where voice communications are involved, as in this example, central office CO will typically be located at a telephone provider site. Alternatively, DSL communications may be limited to data communications, in which case central office CO may be a server location, such as a public or proprietary (Internet or intranet) server location with which client locations H may communicate data, in which case the analog voice signal capability would likely not be present.

As shown in Figure 1, each of twisted-pair facilities TWP is received by digital subscriber line access multiplexer (DSLAM) 10, the construction of which will be described in further detail hereinbelow relative to the preferred embodiments of the invention. In this example, DSLAM 10 is able to separate the voice signals from the data communications received over facilities TWP, and forward these signals to the public switched telephone network (PSTN) via voice digital switch 12, which also resides at central office CO; of course, voice communications from PSTN to a client location H, such as to handset $6_0$ at client location $H_0$, may also be handed by digital switch 12 and DSLAM 10, in the conventional manner.

For data communications, DSLAM 10 is in communication with a local network, such as local-area-network (LAN) 14 at central office CO as shown in Figure 1; alternatively, as is typical for central office implementations at Internet service providers, DSLAM 10 may be in communication with an Asynchronous Transfer Mode (ATM) network by way of which bidirectional communications with the Internet may be carried out more directly. Referring back to the example of Figure 1, LAN 14 may be arranged in the conventional fashion for LANs, as is well known in the art, such as an Ethernet network, over which communications may be carried out in the conventional manner. Such LANs are compatible with packet communication, as is well known. In the example of Figure 1, local servers 15 reside on LAN 14, such that client locations H may access locally stored data therefrom via the DSL connection. Additionally, particularly in the telephone network application, an Internet gateway may reside on LAN 14, such that client locations H may bidirectionally access the Internet via central office CO.

DSLAM 10 is also connected to element management system (EMS) 17. EMS 17 is a local host computer, such as a personal computer or workstation, that may be used to access and control system management functions within DSLAM 10 by way of serial or parallel interfaces.

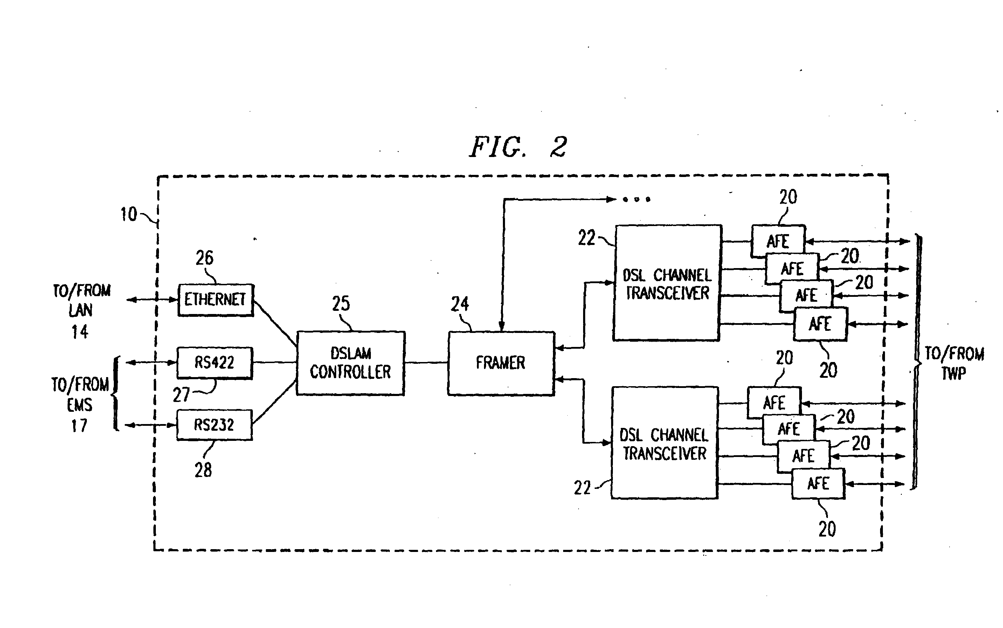

Referring now to Figure 2, an illustrative architecture of DSLAM 10 according to the preferred embodiments of the invention will now be described. As shown in Figure 2, DSLAM 10 includes multiple analog front end (AFE) functions 20, each of which serve as a DSL port and thus bidirectionally connect to one of twisted pair facilities TWP, to receive communications from a connecting client location H. AFE functions 20 are constructed as circuit cards, including mixed-signal (i.e., involving both digital and analog operations) integrated circuits, to provide all loop interface and line driver functions necessary for full-duplex DSL communications. Examples of integrated circuits that may be used to realize AFE functions 20 include the TLV320AD12 central office ADSL codec, and THS6002 line driver, both available from Texas Instruments Incorporated.

DSL channel transceivers 22 of DSLAM 10 each connect bidirectionally to multiple ones of AFE functions 20. In the example of Figure 2, each DSL channel transceiver 22 connects to four AFE functions 20; of course, the specific number of AFE functions 20, and thus DSL channels, to be processed through a given one of DSL channel transceivers 22 may vary with the particular DSLAM architecture and also the processing capacity of the DSL channel transceivers 22. DSL channel transceivers 22 are each preferably a programmable digital device for executing the necessary signal processing operations for both transmission and receipt of the data payload. These operations include such functions as echo cancellation, encoding and decoding of the data into appropriate subchannels for transmission, and performing Fast Fourier Transform (FFT) signal processing between the frequency domain and time domain. Particularly at DSL data rates, the digital data processing capacity and power of DSL channel transceivers 22 is preferably of a high level, preferably with capability on the order of that provided as digital signal processors of at least the capability of TMS320CL548 DSPs available from Texas Instruments Incorporated. Each of DSL channel transceivers 22 are connected to framer function 24, which is also preferably implemented as a DSP such as the TMS320CL548 noted above. Framer function 24 performs the appropriate formatting of the digital data into the appropriate packets and frames for processing within DSLAM 10. While two DSL channel transceivers 22 are explicitly illustrated in Figure 2, it is of course contemplated that any number of DSL channel transceivers 22 may feed (and be fed by) framer function 24, depending upon the particular architecture and capability of DSLAM 10.

DSLAM controller 25 is bidirectionally connected to framer 24 on one side; on its network side, DSLAM controller 25 is bidirectionally connected to Ethernet network interface card (NIC) 26, RS422 high-speed serial interface 27, and RS232 serial interface 28. Ethernet NIC 26 interfaces DSLAM 10 to LAN 14, as illustrated in Figure 1; serial interfaces 27, 28 interface DSLAM 10 to EMS 17, also as shown in Figure 1. In this regard, one of the functions carried out by DSLAM controller 25 according to this illustrative architecture of Figure 2 is the local control of the setup and operation of DSLAM 10, in response to control instructions from EMS 17 received via serial interfaces 27, 28 (or, alternatively, over LAN 14 via Ethernet NIC 26). In the communication of data to and from the DSL channels, DSLAM controller 25 performs the function of handling data flow control and channel management of the DSL channels connected to AFE functions 20 in DSLAM 10, as well as data flow control between the DSL channels and NIC 26. As will also be described in more detail hereinbelow, DSLAM controller 25 also performs Layer 2 and Layer 3 network protocol processing, according to various protocols such as PPP, IP routing, ARP, and the like.

According to the preferred embodiments of the present invention, DSLAM controller 25 may be implemented as a single DSP device dedicated to the DSLAM controller functions described above, having capabilities such as the TMS320LC548 DSP available from Texas Instruments Incorporated, as noted above. In this regard, it is preferable that such a DSP device used as DSLAM controller 25 have on-chip random access memory (RAM), such as does the above-noted TNS320LC548 DSP. Alternatively, in the event that higher processing capability DSPs, such as those of the TMS320C6x class of DSPs available from Texas Instruments Incorporated, are used for other functions in DSLAM 10 (i.e., framer function 24 and DSL channel transceivers 22), and if sufficient processing capacity remains available in that DSP to handle the functions of DSLAM controller 25, the digital functions of DSLAM 10 may then be realized in a single DSP device. As such, the functional boundaries of DSLAM 10 shown in Figure 2 may or may not represent the boundaries of integrated circuits used to realize these functions, depending upon the processing power of the particular circuits.

Alternatively, DSLAM controller 25 may, of course, be realized by way of custom logic circuitry, dedicated to the flow control operations described hereinbelow.

As noted above, it is preferable that DSLAM controller 25 be realized as a digital signal processor (DSP), preferably one compatible with other DSPs used within DSLAM 10 as DSL channel transceivers 22 and framing function 24. This DSP realization of DSLAM controller 25 allows for data flow through DSLAM 10 without requiring data translation and other interface considerations that may otherwise be necessary if DSLAM controller 25 were realized as a general purpose microprocessor. Additionally, the realization of DSLAM controller 25 as a DSP also permits use of the same development platform for the operation of DSLAM controller 25 as for the other DSPs within DSLAM 10. Of course, as will become apparent to those skilled in the art having reference to this specification, many of the benefits of the present teaching may also be realized even if DSLAM controller 25 is implemented by way of such a microprocessor or other hardware other than a DSP device.

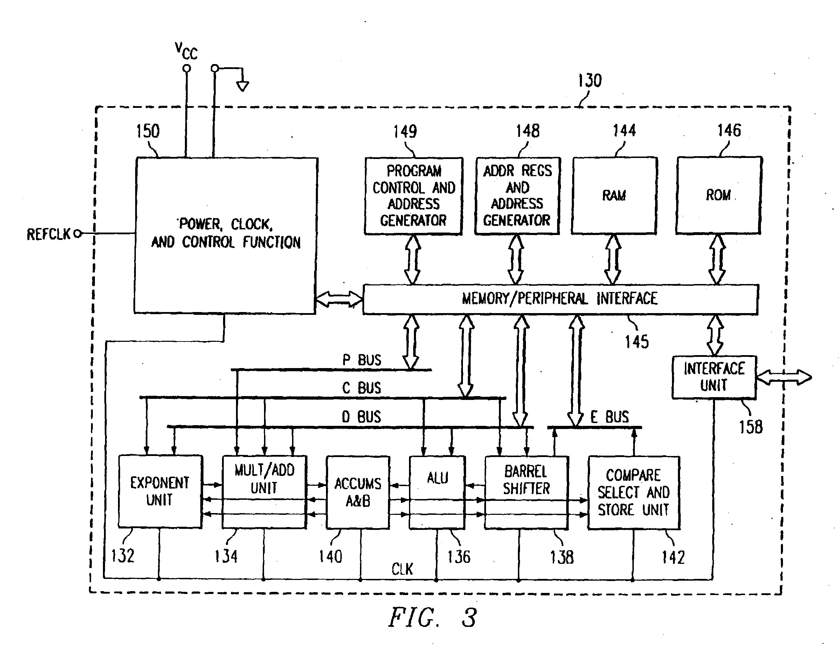

Referring now to Figure 3, an illustrative architecture of DSP 130, according to which DSLAM controller 25 may be realized, will now be described in detail. The example of DSP 130 corresponds to the architecture of the above-noted TMS320LC548, it being understood that DSPs constructed according to other architectures may alternatively be utilized.

DSP 130 in this example is implemented by way of a modified Harvard architecture, and as such utilizes three separate data buses C, D, E that are in communication with multiple execution units including exponent unit 132, multiply/add unit 134, arithmetic logic unit (ALU) 136, barrel shifter 138. Accumulators 140 permit operation of multiply/add unit 134 in parallel with ALU 136, allowing simultaneous execution of multiply-accumulate (MAC) and arithmetic operations. The instruction set executable by DSP 130, in this example, includes single-instruction repeat and block repeat operations, block memory move instructions, two and three operand reads, conditional store operations, and parallel load and store operations, as well as dedicated digital signal processing instructions. DSP 130 also includes compare, select, and store unit (CSSU) 142, coupled to data bus E, for accelerating Viterbi computation, as useful in many conventional communication algorithms.

DSP 130 in this example includes significant on-chip memory resources, to which access is controlled by memory/peripheral interface unit 145, via data buses C, D, E, and program bus P. These on-chip memory resources include random access memory (RAM) 144, read-only memory (ROM) 146 used for storage of program instructions, and address registers 148. Program controller and address generator circuitry 149 is also in communication with memory/peripheral interface 145, and receives program instruction code from ROM 146 or from other storage via memory/peripheral interface 145, and generates control signals applied to each of the functional units of DSP 130 to control the execution of instructions corresponding to the received program instruction code. Interface unit 158 is also provided in connection with memory/peripheral interface 145 to control external communications. Power, clock and control function 150 refers, in general, to control circuitry within DSP 130 to handle such functions as power distribution and voltage regulation, clock generation, and overall control of DSP 130; additionally, power, clock and control function 150 may further realize other interface functions, such as serial and host ports, as well as additional control functions such as timers, JTAG test interface circuitry, built-in self test circuitry, and the like.

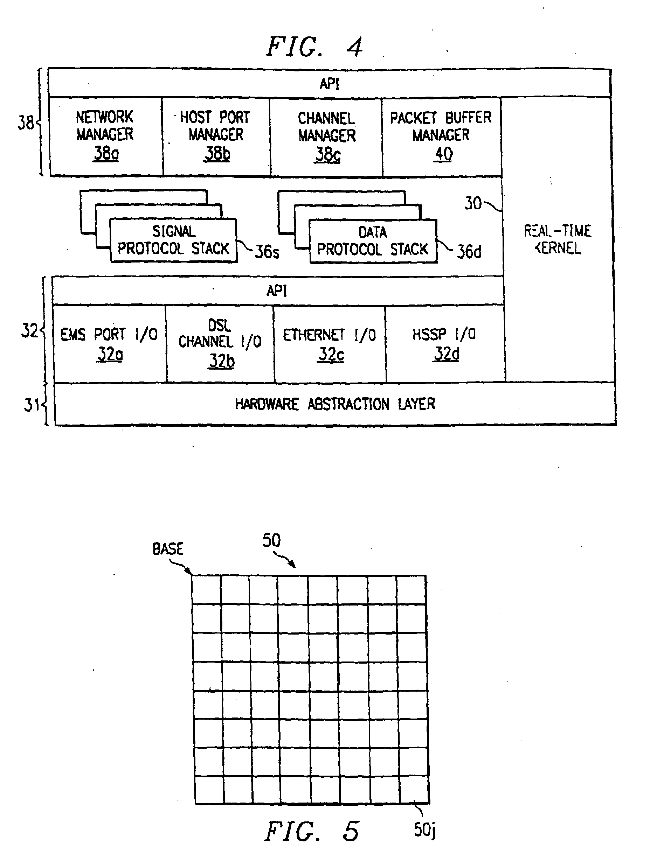

As noted above, DSLAM controller 25 performs network protocol processing of data packets both in the transmit and receive directions. Referring now to Figure 4, the software architecture of DSLAM controller 25, implemented by way of DSP 130 according to the preferred embodiments of the invention, will now be described.

The architecture of Figure 4 is based upon real-time kernel 30, which includes functional components upon which the remainder of DSLAM controller 25 software is based. These components include a real-time scheduler, a standard I/O management system, and a packet-oriented memory management system according to the preferred embodiments of the present invention.

The real-time scheduler portion of real-time kernel 30, according to the preferred embodiment of the invention, uses priority-based event driven round robin scheduling to handle the asynchronous network interface data traffic and message transmissions passing through DSLAM 10 under the control of DSLAM controller 25. In this example, each event is described by an event descriptor data structure which indicate the type and priority of the event, along with event-specific notify values, flags, states, and information regarding the device and port with which the event is associated.

Relative to the standard I/O management system, hardware abstraction layer 31 includes the hardware dependent portions of driver software for each of the interface functions to which DSLAM controller 25 is responsive. The device drivers for the DSL channels supported by AFE functions 20 (Figure 2), Ethernet interface via NIC 26, and serial port interfaces 27, 28, are preferably developed according to a standard I/O model, as are the dynamically stackable protocols to be described in further detail hereinbelow. Application program interface (API) layer 32 resides "above" hardware abstraction layer 31, and includes EMS port I/O driver 32a, DSL channel I/O driver 32b, Ethernet I/O driver 32c, and HSSP (high-speed serial port) I/O driver 32d, as illustrated in Figure 4. These drivers in API 32 interfaces to the protocol layer of the architecture, represented by signal protocol stack 36s and data protocol stack 36d in the architecture of Figure 4.

According to this software architecture illustrated in Figure 4, a particular network protocol may be implemented either by way as a specific application or as a stackable protocol driver. The protocol driver implementation, which provides better performance but less flexibility, is preferred for a network protocol if that protocol must execute upon almost every data packet, such as during the NPL phase of PPP communications.

Signal protocol stack 36s in the architecture of Figure 4 is a protocol stack that is used primarily during initialization of communications between a DSL modem 2 at a client location H (Figure 1) and DSLAM 10. Once a bidirectional channel has been established, data protocol stack 36d is used for the storage and processing of data packets and their associated overhead (i.e., headers and tails), as will be described below.

Above the protocol stack layer (36s, 36d) , various system manager software functions reside in API 38 of the architecture of Figure 4. Network manager 38a, host port manager 38b, and DSL channel manager 38c each provide a uniform API for top level applications in DSLAM controller 25, such top level applications including an EMS agent, DSL channel IP routing, DSL channel PPP processing, ARP and SNMP protocols, and the like. Manager functions 38a, 38b, 38c all share a common code base for standard I/O management functions, as noted above, while providing device-specific management functions.

In operation, data packets received and retransmitted through DSLAM controller 25 effectively make their way through the software architecture of Figure 4. For example, a DSL message received by one of AFE functions 20 (Figure 2) is received as a group of packets by hardware abstraction layer 31, and is then handled by DSL channel I/O driver 32b, which places the packets into data protocol stack 36d. The packets in data protocol stack 36d are processed (by packet buffer manager 40, as will be described below) according to the various protocols, and then handed off to API 38 for processing by the associated manager according to the particular destination of the message. Once the appropriate manager function 38a, 38b, 38c performs its processing, the packet is then forwarded back through data protocol stack 36d to the appropriate I/O driver 32 for the packet destination.

As illustrated in Figure 4 and as noted above, the software architecture of DSLAM controller 25 includes packet buffer manager 40. Packet buffer manager 40 corresponds to a group of program instructions that, when executed by DSP 130 as DSLAM controller 25 described above, executes a zero-copy packet-based memory management system for a multi-protocol, multi-channel DSL communications system such as DSLAM 10, according to the present teaching. The zero-copy system realized by packet buffer manager 40 permits the processing of a block of data by DSLAM controller 25 through a series of different network interfaces, protocols, and associated processing, while maintaining the contents of the data block in place in memory.

Referring back to Figure 3, the program instructions of packet buffer manager 40 are preferably stored in ROM 146 of DSP 130 used to implement DSLAM controller 25, and are executed by way of access to on-chip RAM 144 of DSP 130. RAM 144 may be used for the storage of the data packets (and their associated overhead) according to the preferred embodiments of the invention, because of the reduction in memory requirements enabled by the zero-copy memory management performed by packet buffer manager 40. As such, not only are the memory requirements kept to a minimum, but the use of the high-speed on-chip RAM 144 provides improved performance in the data flow under the control of DSLAM controller 25 according to the present teaching.

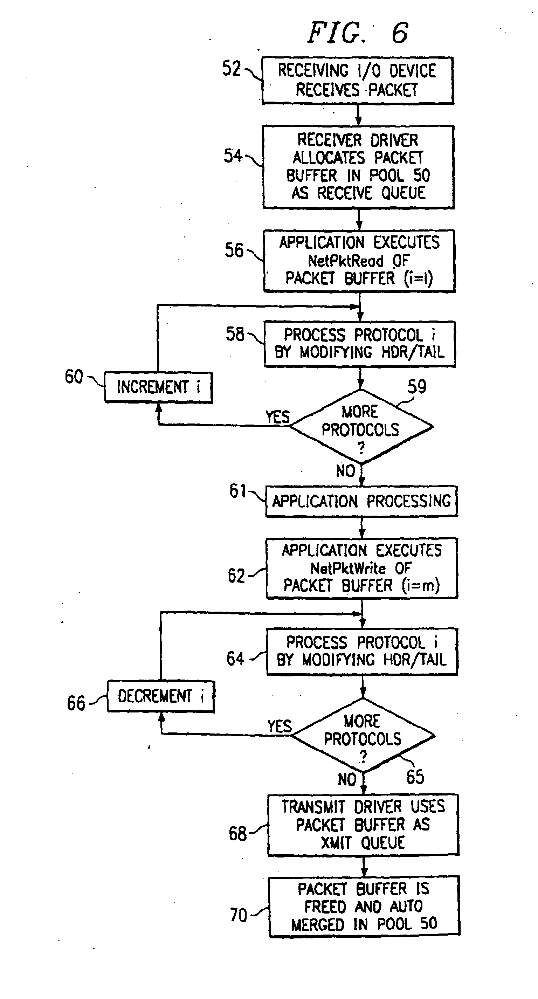

According to the preferred embodiments of the invention, a portion of RAM 144 is pre-allocated (e.g., upon start-up of DSLAM controller 25) as a memory pool for packet buffers, for run-time usage. Figure 5 illustrates an example of such a pre-allocated memory pool 50. Memory pool 50 is preferably a contiguous block of memory in RAM 144, having a size that depends upon the particular application requirements, such as the channel capacity of DSLAM 10. Memory pool 50 is also preferably organized as an integral number of contiguous minimum size memory blocks $50_j$. The size of minimum size memory blocks also depends upon the particular applications being served by DSLAM controller 25, and may correspond to a minimum or average packet size for the desired applications. It is preferred that the size of memory blocks $50_j$ be smaller than the average packet size but larger than the minimum packet, and correspond to a power-of-two multiple of data words. For example, given a minimum packet size of 62 bytes for Ethernet messages, minimum size memory blocks $50_j$ may be set to 64 bytes (slightly larger than the minimum packet size and thus smaller than the average packet size, and having a power-of-two interblock offset). It is believed that the precision with which the minimum size for blocks $50_j$ is selected is not critical; as such, it may be desirable to sacrifice memory utilization in order to reduce the number of processor operations and cycles, such as in the 64 byte minimum size noted above. Additionally, as will be noted below, each of blocks $50_j$ will be accessed on a data-word basis, with the word width corresponding to the architecture of DSP 130 with which DSLAM controller 25 is realized.

As illustrated in Figure 5, memory pool 50 has a start address BASE that is saved in a global variable store in DSP 130, for use in physical memory address calculation. Once allocated, memory pool 50 is preferably protected so as to not be available for other applications.

Each message data packet, regardless of source or protocol, that is processed by DSLAM controller 25 according to the preferred embodiments of the invention, is stored in packet memory pool 50 by way of a common data structure P_BUF, which is specifically designed for the efficient storage of variable length data packets. The arrangement of data structure P_BUF permits its multiple instances (for multiple message packets) to be efficiently queued, allocated, and de-allocated from within memory pool 50. According to a first preferred embodiment of the invention, packet buffer data structure P_BUF may be described as follows (following to a C-language type definition):

```
Typedef _P_BUF

       Q_ENTRY   Pkt_Q;        /* packet queue entry */

       WORD      B_Size;       /* packet buffer total size */

       WORD      D_Offset;     /* data start offset */

       WORD      D_Size;       /* total valid data size */

       WORD      D_Flag;       /* data flag */

   }  P_BUF,   *P_BUFP
```

The name *pPktBuf of a specific packet buffer data structure will be specified upon its instantiation.

Entry structure Pkt_Q is a queue entry structure, itself defined by Q_ENTRY, that contains forward and backward pointers for a given data packet buffer. These forward and backward pointers point to adjacent leading and trailing data packet buffers, respectively, of the current data packet buffer, facilitating queuing and de-queuing of the packet buffers.

The WORD macro for each of the remaining fields of the packet data buffer structure describes actual machine words in the data structure. In this first embodiment of the invention, field B_Size indicates the total number of data words allocated for the packet buffer, including both the actual data and also memory space reserved for the expected headers and tails for the potential protocols. As noted above, the data word or segment size utilized according to the preferred embodiments of the invention preferably matches the natural data word size (i.e., bus size) of DSP 130 used to implement DSLAM controller 25. For example, in the TMS320LC548 DSP noted above, the data word size is sixteen bits, or two bytes; as such, the number of data words expressed in field B_Size (and in the other fields of the packet buffer data structure) will specify the number of sixteen-bit data words. The memory size indicated by field B_Size should be an integral multiple of the minimum block size indicated above, to obtain the full benefit of the present teaching.

Field D_Offset indicates the number of words from the starting address of the data packet buffer to the first valid word of actual data in the packet buffer. As will be apparent from the following description, the value of this field D_Offset is adjusted to represent that part of the data that is to be considered by a particular protocol. For example, stripping off a header may be accomplished, according to the preferred embodiment of the present invention, simply by adjusting the value of field D_Offset to no longer include the stripped header as part of its valid data; conversely, a header may be added by changing the value of field D_Offset to allow for additional valid data, and by then inserting the desired header into this new area. As such, modification of the value of field D_Offset enables the modification of header data without requiring the copying of the packet in memory, according to the preferred embodiments of the invention. Field D_Size operates in combination with field D_Offset, as it specifies the size, in data words, of the valid data in the data packet buffer. As such, the value of field D_Size is modified along with modifications to the value of field D_Offset when headers are added or stripped; additionally, tails to the actual data may be added and stripped via modification of the value of field D_Size, in similar manner as discussed above for field D_Offset.

Field D_Flag is provided in the data packet buffer structure according to the preferred embodiments of the invention, to indicate the number of valid data bytes in the last data word of the valid data indicated by field D_Size. As noted above, message packets are typically organized as bytes, while the data words or segments used by DSP 130 in DSLAM controller 25 are multiple bytes in width; accordingly, data packets organized according to the preferred embodiments of the present invention will often have vacant bytes remaining in their terminal data words that are not to be associated with the data packet and which, if transmitted as part of the packet, could cause an error. The value of field D_Flag thus will indicate the number of valid bytes in the terminal data word of the data packet buffer. It is contemplated that, for best efficiency, the actual value stored in field D_Flag would equate to the number of not-valid data bytes. For example, if only one byte is valid in the last sixteen-bit data word of a data packet buffer, the value of its field D_Flag would be 1; conversely, if both bytes were valid, the value of field D_Flag would be 0. For a thirty-two-bit data word, the possible values of field D_Flag would be 0 through 3 (corresponding to four through one bytes being valid, respectively).

According to the first preferred embodiment of the present invention, packet buffer manager 40 (Figure 4) includes a library of functions at API level 38. These functions perform the functions of packet buffer allocation and deallocation; other packet buffer operations are also included in this library. A list of these library functions according to the first embodiment of the invention is as follows:

P_Alloc (WORD Size, WORD Offset) : This function allocates a portion of memory pool 50 for use as a packet buffer. The size of the packet buffer is specified by the operand Size, and the location of the buffer is at Offset from the start of address BASE. Upon the writing of a packet buffer into this allocated area of memory pool 50, the actual packet buffer will be stored in a portion specified by field B_Size (which will be a multiple of the minimum size memory blocks in memory pool 50) in the defined packet buffer.

P_Free (P_BUF *pPktBuf) : This function returns allocated packet buffer back to memory pool 50. As will be described in detail hereinbelow, any merging of free memory blocks resulting from the execution of this function will also be performed, to reduce fragmentation.

P_Append (P_BUF *pPktBuf, WORD *Buf, SIGNED WORD Count) : This function prepends or appends (as specified by the sign of operand Count) the data specified by *Buf into the specified packet buffer *pPktBuf.

P_Remove (P_BUF *pPktBuf, SIGNED WORD Count) : This function removes the amount of data indicated by the magnitude of operand Count, from the beginning or end (as specified by the sign of Count) of the packet buffer.

P_Catenate (P_BUF *pPktBuf1, P_BUF *pPktBuf2) : This function concatenates the specified packet buffers *pPktBuf1 and *pPktBuf2.

P_BUF*NetPktRead(IO_CHAN *pIODesc) : This function is an API level function that permits the operating application to retrieve (read) a pointer to the packet buffer *pPktBuf in memory pool 50 that was used by the specified device I/O channel driver *pIODesc; this read function serves to identify the location of packet buffer *pPktBuf as it is processed through protocol stack 36d, with its headers and tails modified or stripped according to the intervening protocols by packet buffer manager 40, leaving the message data for the application that called this function.

NetPktWrite (IO_CHAN, *pIODesc, P_BUF *pPktBuf) : This function is also an API level function that writes the packet buffer *pPktBuf returned from the NetPktRead function, through protocol stack 36d, and to the transmit queue of the specified I/O channel driver *pIODesc.

These functions permit the multiple protocol processing of message data through DSLAM controller 25, without requiring the copying of the data itself in memory.

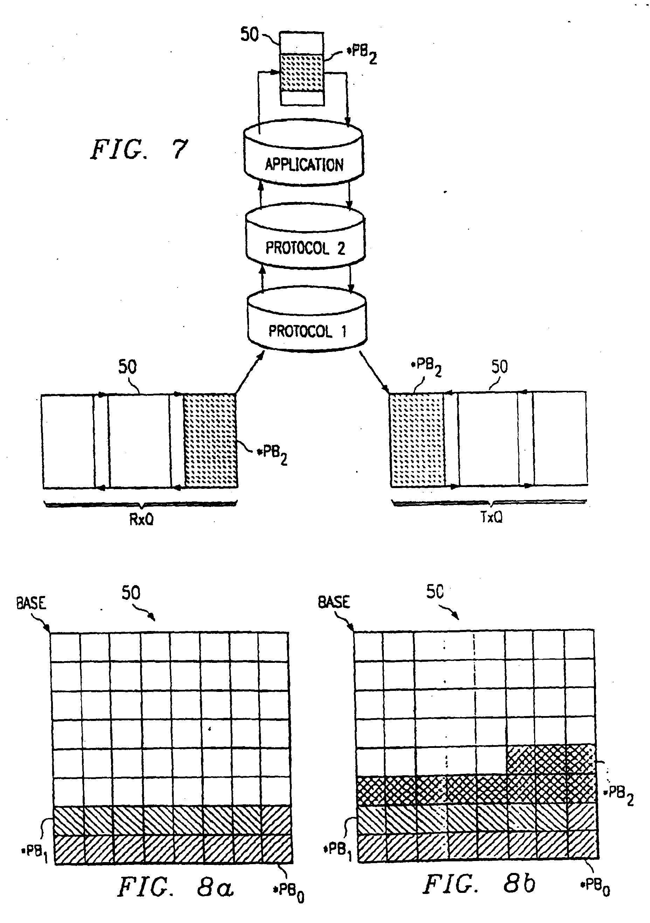

Referring now to Figures 6 and 7, the operation of DSLAM controller 25 according to the first preferred embodiment of the invention will now be described in detail. Figure 6 illustrates, in flow chart form, the method steps utilized according to this first embodiment of the invention, while a schematic example of the flow control process is illustrated in Figure 7. As shown in Figure 7, an illustrative task performed by DSLAM controller 25 according to the present invention is shown relative to a packet buffer *PB$_2$ that is stored in memory pool 50 as part of a receive queue RxQ, processed through two protocols (Protocol 1 and Protocol 2), and operated upon by an application; the packet buffer *PB$_2$ is then reprocessed through Protocols 2 and 1, and forwarded to a transmit queue TxQ. The I/O device receiving the message data packet will generally differ from the I/O device retransmitting that message; for the example of upstream DSL traffic, the message data packet will be received by one of the DSL I/O channels (AFE 20) and retransmitted to LAN 14 via Ethernet NIC 26. In any event, as shown in Figure 7, packet buffer *PB$_2$ remains at its same location in memory pool 50 throughout this processing.

Referring back to Figure 6, one of the I/O channels of DSLAM controller 25 receives a message data packet in process 52. As noted above relative to Figures 2 and 4, the set of possible I/O channels by way of which a message data packet can be received by DSLAM controller 25 include each of the DSL channels served by DSLAM 10, the serial ports coupled to EMS 17 via serial interfaces 27, 28, and the Ethernet I/O channel served by Ethernet NIC 26. The corresponding drivers to these I/O channels are illustrated in Figure 4 as the EMS port I/O driver 32a, DSL channel I/O driver 32b, Ethernet I/O driver 32c, and high-speed serial port I/O driver 32d. In process 54, the receiver driver 32 allocates a packet buffer in memory pool 50, as part of its receive queue; this allocated packet buffer *PB (Figure 7) will be used to store the received packet data, along with its headers and tails as received and as processed throughout the protocol processing and forwarding by DSLAM controller 25, without being recopied.

Figure 8a and 8b illustrate an example of allocation process 54 according to the first preferred embodiment of the present invention. Figure 8a illustrates the arrangement of memory pool 50, for example in on-chip RAM 144 of DSP 130, in which packet buffers *PB$_0$, *PB$_1$ are previously allocated. As evident from Figure 8a, packet buffers *PB$_0$, *PB$_1$ reside at the terminal end of memory pool 50 (at the furthest offset from address BASE); this arrangement is, of course, only by way of example. In process 54, the receiving driver 32 executes library function P_Alloc (WORD Size, WORD Offset) for its received message data packet, selecting a value of operand Size (as an integral number of minimum size memory blocks 50$_j$) that is sufficient to store the actual message data along with any headers that may be added or modified during the processing of Figure 6; the value of operand Offset is then based upon the current location of the previously allocated packet buffers *PB$_0$, *PB$_1$ and the value of operand Size for the received packet. Figure 8b illustrates the allocation of memory pool to accommodate packet buffer *PB$_2$. In this example, the value of operand Size is selected as eleven minimum size memory blocks 50$_j$, and the value of operand Offset will be set to the value of operand Offset for packet buffer *PB$_1$ less eleven (i.e., the value of operand Size in this example). Packet buffer *PB$_2$ is thus allocated within memory pool 50 as a result of process 54, executed by the appropriate I/O channel driver 32.

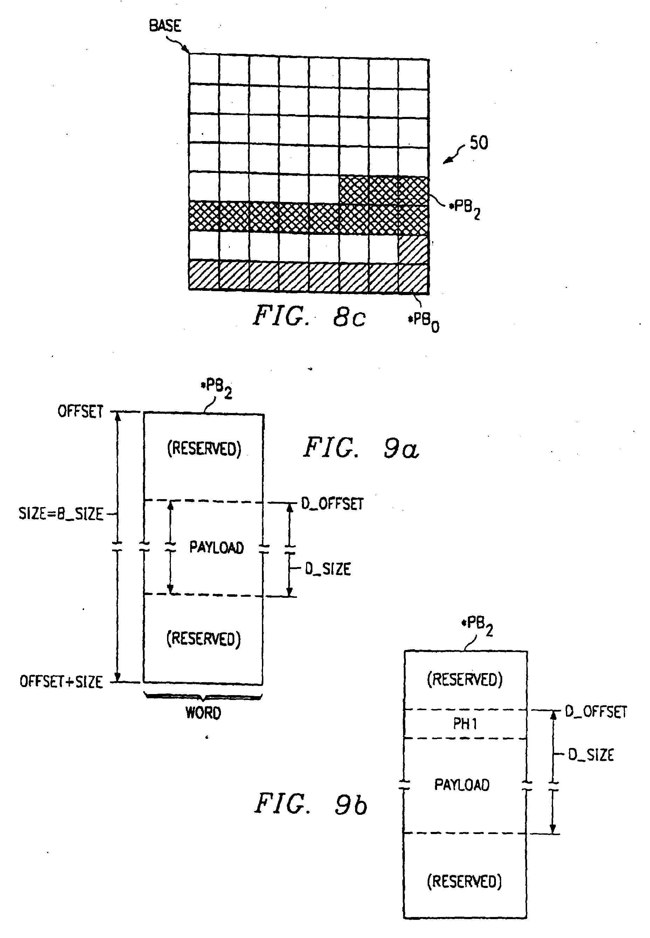

Figure 9a illustrates the contents of an example of allocated packet buffer *PB$_2$, immediately after allocation. As shown in the example of Figure 9a, the overall size of the allocated packet buffer *PB$_2$ is specified by the value of operand Size in the library function P_Alloc (WORD Size, WORD Offset). The actual message data, referred to as "PAYLOAD" in Figure 9a, resides within packet buffer *PB$_2$, with additional reserved portions of packet buffer *PB$_2$ residing above and below PAYLOAD. This actual message data may include not only the message data, but also such header information as is necessary to be eventually transmitted (e.g., PPP packet header data). The value of field D_Offset indicates the location at which the actual data PAYLOAD begins within packet buffer *PB$_2$ at this time, while the value of field D_Size is set to the size of the actual data stored within packet buffer *PB$_2$ at this point. Additionally, after allocation and once the values of fields D_Offset and D_Size are established for packet buffer *PB$_2$, upon the I/O driver 32 storing the data into memory pool 50 as a receive queue, the field D_Flag will be set to indicate the number of valid data bytes in the last data word of the actual data. These fields D_Offset, D_Size, and D_Flag will be maintained in a local store or register within DSLAM controller 25, in association with the packet buffer *PB$_2$.

As indicated in process 56, one of applications 38 that is to operate upon packet buffer *PB$_2$ initiates the execution of an instance of library function NetPktRead(IO_CHAN *pIODesc) described above. This instance of function NetPktRead specifies the I/O channel driver 32 that received the packet and allocated packet buffer *PB$_2$ in processes 52, 54, and also receives a pointer indicating the defined and allocated packet buffer *PB$_2$. Also as part of this initiation of process 56, a protocol index i is set to the first protocol in the sequence (Protocol 1 of Figure 7). The execution of this library function NetPktRead causes packet buffer manager 40 to process the packet buffer *PB$_2$ through the various sequence of protocols (e.g., Protocol 1 and Protocol 2 of Figure 7) necessary for the message, as will now be described.

Execution of the NetPktRead function includes the iterative performing of protocol processing process 58. In process 58, packet buffer manager 40 in DSLAM controller 25 performs operations upon the header or tail portions of the contents of specified packet buffer *$PB_2$, without copying the entire contents thereof; indeed, these modifications are performed by way of the above-described library functions P_Append (P_BUF *pPktBuf, WORD *Buf, SIGNED WORD Count) and P_Remove (P_BUF *pPktBuf, SIGNED WORD Count), as will now be described relative to Figure 9b.

In general, protocol processing process 58 typically includes the adding, deleting, or modifying of overhead bytes according to the appropriate protocols, without disturbing the actual message data itself. Decision 59 is then performed to determine if additional protocols are required to be processed; if so (decision 59 is YES), protocol index i is incremented in process 60, and control returns to process 58 for such additional processing.

Within each instance of protocol processing process 58, one or more of the following functions may be called by packet buffer manager 40 in carrying out the P_Buf_NetPktRead function, depending upon the current protocol to be processed. For example, to add a protocol header, the following function would be executed:

P_Append (P_BUF *pPkt3uf, WORD *Buf, SIGNED WORD Count). Adding a header requires the value of field *Buf to equal the desired header data, and field Count to be positively signed to prepend the header. The value of pointer D_Offset will, as a result, be decremented by the value of field Count, and the value of field D_Size will be incremented by the value of field Count.

Figure 9b illustrates the addition of protocol header PH1, for the processing of Protocol 1 in the example of Figure 7. As described above, this operation is performed within the allocated packet buffer *$PB_2$ in memory pool 50, without copying the packet itself.

Protocol processing process 58 may also be performed by packet buffer manager 40 adding a tail into the current packet buffer. Addition of a tail would be performed by executing the function:

P_Append (P_BUF *pPktBuf, WORD *Buf, SIGNED WORD Count). Adding a tail requires the value of field *Buf to equal the desired tail data, and field Count to be negatively signed to append the tail. The value of pointer D_Offset will not change in this instance, but the value of field D_Size will be incremented by the value of field Count.

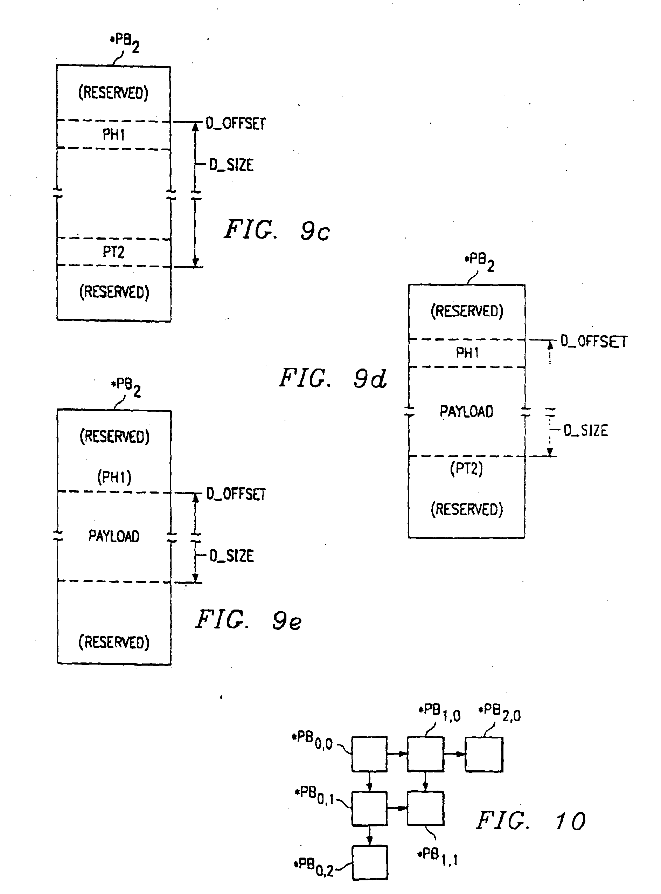

Figure 9c illustrates the addition of protocol tail PT2, for the processing of Protocol 2 in the example of Figure 7. As described above, this operation is performed within the allocated packet buffer *$PB_2$ in memory pool 50, without copying the packet itself. As shown in Figure 9c, packet header *$PB_2$ includes both protocol header PH1 and protocol tail PT2.

Deletion of a header or tail may be performed, as part of process 58, by way of function P_Remove, as noted above (and as will be shown by way of example hereinbelow). Modification of a header or tail, such as is often required according to address resolution protocol (ARP), may also be performed in process 58, preferably by way of deleting a header or tail and then prepending or appending the desired header or tail, in the manner described above.

As noted above, protocol processing process 58 is repetitively performed until no further protocols remain to be processed (decision 59 is NO), following which control passes to the application 38 for its specific processing of the current packet buffer, shown as process 61 in Figure 6. Such processing may include simply passing the actual message data (PAYLOAD) through to the destination I/O channel; additionally, some preprocessing may be necessary (such as in the case of PPP communications) prior to the passing of the message data. In any event, application 38 will interrogate the state of field D_Flag for the packet buffer to determine the number of valid bytes in the terminal data word of the actual message data, so as to avoid any error due to unexpected zero-value bytes resulting from the use of data words, rather than bytes, for the packet buffer storage.

It is to be recognized that there may be some delay due to application 38 processing the packet, such that the next packet buffer to be handled by packet buffer manager 40 is not the same one (e.g., *$PB_2$) most recently processed; indeed, it is contemplated that DSLAM controller 25 is simultaneously handling message packets from multiple ones of the I/O channels it serves, relative to multiple applications 38. This eventuality most directly affects the freeing and merging of blocks in memory pool 50, as will be described in further detail hereinbelow.

Upon application 38 completing its processing (process 61), the transmission of the message data corresponding to the desired packet buffer (e.g., *$PB_2$) is initiated by application 38 executing the NetPktWrite (IO_CHAN, *pIODesc, P_BUF *pPktBuf) library function, with operand *pIODesc referring to the destination I/O channel of the packet, and operand *pPktBuf of course referring to the particular packet buffer to be so forwarded. At this point, protocol index i is set (or maintained) at its maximum value, corresponding to the protocol that was last processed through process 58.

In carrying out the transmission processing, packet buffer manager 40 iteratively performs essentially reverses the protocol processing performed upon packet buffer *$PB_2$ in the iterations of process 58. For example, a protocol tail (e.g., tail PT2 of Figure 9c) may be stripped by execution of the function:

P_Remove (P_BUF *pPktBuf, SIGNED WORD Count): Deleting a tail requires the value of operand Count to equal the desired number of data words to be deleted, and to be negatively signed to indicate removal from the end of the actual data in packet buffer *pPktBuf. The value of pointer D_Offset will not be changed by this operation; the cancellation of the tail is instead executed simply by decrementing the value of field D_Size by the value of field Count.

Figure 9d illustrates the result of this operation. In effect, after this instance of process 64, the actual data words corresponding to tail PT2 in the example of Figure 9c still remain in memory, but are simply ignored.

Following the first instance of process 64, decision 65 is performed by packet buffer manager 40 to determine if additional protocols remain to be processed. If so (decision 65 is YES), protocol index i is decremented in process 66, and control passes back to process 64 for additional protocol processing. For the example of packet buffer *PB$_2$, protocol header PH1 may be stripped by executing the function:

P_Remove (P_BUF *pPktBuf SIGNED WORD Count) : Deleting a header requires the value of operand Count to equal the desired number of data words to be deleted, and to be positively signed to indicate removal from the beginning of the actual data in the packet buffer. The value of pointer D_Offset will be decremented by the value of field Count, as will the value of field D_Size.

Figure 9e illustrates the state of packet buffer *PB$_2$ after completion of this instance of process 64.

Upon all protocols having been processed through process 64 (decision 65 is NO), the appropriate I/O channel driver 32 specified in the library function NetPktWrite (IO_CHAN, *pIODesc, P_BUF *pPktBuf) by the application 38 is alerted that it has a packet in memory pool 50, associated with packet buffer *PB$_2$ in this example. This transmit driver 32 then effectively uses packet buffer *PB$_2$ as its transmit queue in process 68, transmitting the data to its corresponding I/O channel (e.g., Ethernet NIC 26) at the appropriate time.

Upon the appropriate I/O channel driver 32 completing its use of the contents of packet buffer *PB$_2$ in this example, process 70 is next performed to free the allocated portion of memory pool 50 that was associated with packet buffer *PB$_2$. This freeing of the packet buffer is performed by execution of the P_Free (P_BUF *pPktBuf) function, referring to the packet buffer to be freed. The portion of memory pool 50 that was previously allocated to the current packet buffer *PB$_2$ is then returned for reallocation.

According to the preferred embodiments of the invention, the freeing of a packet buffer from memory pool 50 is performed in such a way that free blocks are merged, thus preventing segmentation in subsequent packet buffer allocations. An example of the operation of process 70 in performing this merging will be described relative to Figure 8c, in which packet buffers *PB$_0$ and *PB$_2$ remain allocated in memory pool 50, but in which packet buffer *PB$_1$ (see Figure 8b) has already been freed. According to the preferred embodiments of the invention, in connection with the freeing of packet buffer *PB$_2$, packet buffer manager 40 examines the state of memory pool 50 to determine whether packet buffer *PB$_2$ is contiguous with the allocated blocks of memory pool 50; if not (as in the case of Figure 8c), packet buffer manager 40 merges the blocks of memory pool 50 considered as free, preferably by altering the pointers contained within packet buffer *PB$_2$ in its queue entry P_ENTRY Pkt_Q described above. Upon freeing of the packet buffer *PB$_2$ in process 70 in this situation, the available blocks within memory pool 50 are readily prevented from becoming fragmented.

According to this first preferred embodiment of the invention, therefore, the control of data flow through a DSLAM is effected with minimal memory requirements, as the necessity of copying the contents of the message data packets is avoided. Additionally, the processing operations and machine cycles that are required for generating such copies (indeed, multiple copies) in conventional DSLAM controllers are saved according to the present teaching, thus freeing additional processing capacity. This additional processing capacity, and resulting reduction in power consumption, enables more DSL channels to be supported by each DSLAM line card, improving the port density of the DSLAM. On-chip memory, such as on-chip RAM for a DSP serving as the controller, may also be used because of the reduced memory requirements, further improving the performance of the DSLAM controller. Processing efficiency of the DSLAM is also improved according to this embodiment of the invention through the use of data words used by the DSP or other processor serving as the DSLAM controller, rather than the byte orientation of conventional messaging protocols. In addition, memory fragmentation is reduced according to the preferred embodiment of the invention by the automatic merging of freed memory blocks in the packet buffer memory pool, further improving the performance of the DSLAM controller.

Referring now to Figure 10, the logical arrangement of packet buffers *PB according to a second preferred embodiment of the present invention will now be described. The arrangement of Figure 10 according to this embodiment of the invention is particularly beneficial in the event that the lengths of headers and tails to be encountered in the processing of the packets is unknown. Through the use of a linked list in this manner, the unnecessary allocation of extremely large portions of memory pool 50, and the resulting cumbersome management of memory pool 50, are avoided.

According to this second embodiment of the invention, the type definition of packet buffer data structure P_BUF is provided as:

```
Typedef _P_BUF
        Q_ENTRY    Pkt_Q;      /* packet queue entry */
        Q_ENTRY    P_List;     /*packet list */
        WORD       B_Size;     /* packet buffer total size */
        WORD       D_Offset;   /* data start offset */
        WORD       D_Size;     /* total valid data size */
        WORD       D_Flag;     /* data flag */
    }  P_BUF,    *P_BUFP
```

which is identical to the packet buffer data structure P_BUF described above except for the presence of the queue entry P_List. According to this embodiment of the invention, a single packet buffer may be located in several packet buffer locations of memory pool 50, effectively as a linked list. The queue entry P_List provides an identifier, for each packet buffer allocation, of the linked list to which the allocation belongs.

Referring back to Figure 10, an example of this linking is illustrated. In this example, packet buffer list $*PB_{0,0}$ through $*PB_{0,2}$ corresponds to a single message data packet for which the number of data words cannot be reliably predicted at the time of allocation, such as where the particular sequence of protocols cannot be known *a priori*. In this example, this single message data packet is stored in three linked packet buffer list entries $*PB_{0,0}$ through $*PB_{0,2}$ that refer to one another. As such, while the protocol processing each entry $*PB_{0,j}$ is performed as described above, both the I/O drivers 32 and the applications 38 may resequence the contents of packet buffer list entries $*PB_{0,0}$ through $*PB_{0,2}$ for purposes of transmission or application processing.

According to this second embodiment of the present invention, memory pool 50 maintains a sequence of packet buffer lists, in similar manner as it maintained the sequence of packet buffers themselves as described above. In the example of Figure 10, the entries of linked packet buffer list $*PB_{1,0}$ and $*PB_{1,1}$ cumulatively correspond to the next packet buffer entry in the sequence of allocated packet buffers, but individually reside in non-contiguous regions of memory pool 50 relative to one another. The third packet buffer $*PB_{2,0}$ in the sequence is able to be stored in a single contiguous region of memory pool 50 because its header and tail data requirements are fixed (e.g., in the case of PPP packets); the data structure according to this packet buffer $*PK_{0,2}$ will therefore be null.

According to this second embodiment of the invention, additional library functions are preferably provided for management of the linked packet buffer entry lists in memory pool 50. These functions include:

P_AllocList (WORD Size, WORD Offset) : This function allocates a portion of memory pool 50 for use as a packet buffer, in the form of a linked list as described above. The allocated portions of memory pool 50 by way of this function are thus reserved for a group of entries.

P_FreeList (P_BUF *pPktBuf) : This function returns allocated list of packet buffer locations back to memory pool 50, performing the appropriate merging of free memory blocks to reduce fragmentation, as described above.

This second preferred embodiment of the invention provides the similar advantages of reduction in necessary memory resources, improvement in processor efficiency, improved port density, enabling of the use of on-chip RAM for DSLAM flow control, and reduction in fragmentation, as described hereinabove relative to the first preferred embodiment of the invention. Additionally, however, this second preferred embodiment of the invention further provides the benefit of permitting linked lists of packet buffer portions, thus enabling on-the-fly definition and processing of various protocols.

While the present invention has been described according to its preferred embodiments, it is of course contemplated that modifications of, and alternatives to, these embodiments, such modifications and alternatives obtaining the advantages and benefits of this invention, will be apparent to those of ordinary skill in the art having reference to this specification and its drawings. It is contemplated that such modifications and alternatives are within the scope of this invention as subsequently claimed herein.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during the prosecution of this application or of any such further application derived therefrom. In particular, with reference to the appended claims, features from dependent claims may be combined with those of the independent claims and features from respective independent claims may be combined in any appropriate manner and not merely in the specific combinations enumerated in the claims.

Insofar as embodiments of the invention described above are implementable, at least, in part, using a software-controlled programmable processing device such as a Digital Signal Processor, microprocessor, other processing devices, data processing apparatus or computer system, it will be appreciated that a computer program for configuring a programmable device, apparatus or system to implement the foregoing described methods is envisaged as an aspect of the present invention. The computer program may be embodied as source code and undergo compilation for implementation on a processing device, apparatus or system, or may be embodied as object code. The skilled person would readily understand that the term computer in its most general sense encompasses programmable devices such as referred to above, and data processing apparatus and computer systems.

Suitably, the computer program is stored on a carrier medium in machine or device readable form, for example in solid-state memory or magnetic memory such as disc or tape and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

**Claims**

1. A method of processing message data packets in a network multiplexer coupled to a plurality of input/output channels, comprising the steps of:

   allocating a memory pool in a memory;
   responsive to receiving a message data packet from a first input/output channel, allocating a packet buffer in the memory pool for the message data packet;
   storing the message data packet in a valid-data portion of the packet buffer of the memory pool therewithin;
   then processing the received message data packet for at least one communications protocol by modifying the size of the valid-data portion of the packet buffer;
   after the processing step, queuing the message data packet of the packet buffer in the memory pool for transmission by way of a second input/output channel; and
   de-allocating the allocated packet buffer in the memory pool.

2. The method of claim 1, wherein the processing step comprises:

   processing the received message data packet for a plurality of communications protocols, by performing a sequence of operations including modifying the size of the valid-data portion of the packet buffer.

3. The method of claim 1 or 2, wherein the step of allocating a packet buffer comprises:

   reserving a selected contiguous series of memory blocks in the memory pool for the packet buffer; and
   defining a valid-data portion within the contiguous series of memory blocks for storage of the received message data packet, by specifying an offset address and a data-size value for the packet buffer.

4. The method of any preceding claim, wherein the sequence of processing steps comprises:

   adding a protocol header by modifying the offset address and the data-size value to increase the size of the valid-data portion of the packet buffer and prepending the protocol header into the newly-increased valid-data portion.

5. The method of any one of claims 1 to 3, wherein the sequence of processing steps comprises:

   deleting a protocol header by modifying the offset address and the data-size value to reduce the size of the valid-data portion of the packet buffer.

6. The method of any preceding claim, wherein the sequence of processing steps comprises:

adding a protocol tail by modifying the data-size value to increase the size of the valid-data portion of the packet buffer and appending the protocol tail into the newly-increased valid-data portion.

7. The method of any one of claims 1 to 5, wherein the sequence of processing steps comprises:

deleting a protocol tail by modifying the data-size value to reduce the size of the valid-data portion of the packet buffer.

8. The method of any preceding claim, wherein each memory block has a size corresponding to a selected number of data words, each data word corresponding to an integral number of bytes;
wherein the step of storing the message data packet further comprises:

setting a flag value corresponding with the number of bytes of valid data in a terminal data word of the packet buffer.

9. The method of any preceding claim, wherein the de-allocating step comprises:

making the packet buffer in the memory pool available for re-allocating; and
merging the selected contiguous series of memory blocks previously allocated to the packet buffer with adjacent available memory blocks in the memory pool.

10. The method of any preceding claim, wherein the step of allocating a packet buffer comprises:

selecting a non-contiguous plurality of regions in the memory pool for the packet buffer;
associating each of the non-contiguous regions with one another as a linked list;
for each of the non-contiguous regions, defining a valid-data portion therewithin for storage of a portion of the received message data packet, by specifying an offset address and a data-size value for the packet buffer.

11. The method of any one of claims 1 to 9, wherein the step of allocating a memory pool allocates an integral number of memory blocks of constant size as a contiguous memory region.

12. A multiplexer for communicating message data between a network and a plurality of client locations, comprising:

a network interface, coupled to the network;
a plurality of input/output channel interfaces, each coupled to one of the plurality of client locations;
at least one transceiver function, coupled to associated ones of the plurality of input/output channel interfaces, for performing digital operations upon message data communicated via the associated input/output channel interfaces;
a controller, coupled to the network interface and to the at least one transceiver function, for processing message data packets of the communicated message data, comprising:

a memory;
logic circuitry, for performing a sequence of operations comprising:

allocating a memory pool in the memory;
responsive to receiving a message data packet from an input/output channel, allocating a first packet buffer in the memory pool for the first message data packet;
storing the message data packet in a valid-data portion of the first packet buffer of the memory pool therewithin;
then processing the received first message data packet for at least one communications protocol by modifying the size of the valid-data portion of the first packet buffer;
after the processing step, queuing the message data packet of the first packet buffer in the memory pool for transmission to the network interface; and
de-allocating the allocated first packet buffer in the memory pool.

13. The multiplexer of claim 12, wherein the sequence of operations performed by the logic circuitry of the controller further comprises:

responsive to receiving a message data packet from the network interface, allocating a second packet buffer in the memory pool for the message data packet;
storing the message data packet in a valid-data portion of the second packet buffer of the memory pool therewithin;
then processing the received message data packet for at least one communications protocol by modifying the size of the valid-data portion of the second packet buffer;
after the processing step, queuing the message data packet of the second packet buffer in the memory pool for transmission to an input/output channel; and
de-allocating the allocated second packet buffer in the memory pool.

14. The multiplexer of claim 12 or 13, wherein the memory and logic circuitry of the controller are implemented into a programmable digital signal processor integrated circuit.

15. The multiplexer of claim 14, wherein the digital transceiver is implemented into a programmable digital signal processor integrated circuit.

16. The multiplexer of any one of claims 12 to 15, wherein the operation of allocating a packet buffer comprises:

reserving a selected contiguous series of memory blocks in the memory pool for the first packet buffer; and
defining a valid-data portion within the contiguous series of memory blocks for storage of the received message data packet, by specifying an offset address and a data-size value for the first packet buffer;
and wherein the processing operation comprises:
processing the received message data packet for a plurality of communications protocols, by performing a sequence of operations including modifying the size of the valid-data portion of the first packet buffer.

17. The multiplexer of any one of claims 12 to 16, wherein the sequence of processing steps comprises:

adding a protocol header by modifying the offset address and the data-size value to increase the size of the valid-data portion of the first packet buffer and prepending the protocol header into the newly-increased valid-data portion.

18. The multiplexer of any one of claims 12 to 16, wherein the sequence of processing steps comprises:

deleting a protocol header by modifying the offset address and the data-size value to reduce the size of the valid-data portion of the first packet buffer.

19. The multiplexer of any one of claims 12 to 18, wherein the sequence of processing steps comprises:

adding a protocol tail by modifying the data-size value to increase the size of the valid-data portion of the first packet buffer and appending the protocol tail into the newly-increased valid-data portion.

20. The multiplexer of any one of claims 12 to 18, wherein the sequence of processing steps comprises:

deleting a protocol tail by modifying the data-size value to reduce the size of the valid-data portion of the first packet buffer.

21. The multiplexer of any one of claims 12 to 20, wherein each memory block has a size corresponding to a selected number of data words, each data word corresponding to an integral number of bytes upon which the logic circuitry of the controller operates;
wherein the operation of allocating the first packet buffer further comprises:

setting a flag value corresponding with the number of bytes of valid data in a terminal data word of the first packet buffer.

22. The multiplexer of any one of claims 12 to 21, wherein the de-allocating step comprises:

making the first packet buffer in the memory pool available for re-allocating; and

merging the selected contiguous series of memory blocks previously allocated to the first packet buffer with adjacent available memory blocks in the memory pool.

**23.** The multiplexer of any one of claims 12 to 20, wherein the step of allocating a packet buffer comprises:

selecting a non-contiguous plurality of regions in the memory pool for the first packet buffer;
associating each of the non-contiguous regions with one another as a linked list;
for each of the non-contiguous regions, defining a valid-data portion therewithin for storage of a portion of the received message data packet, by specifying an offset address and a data-size value for the first packet buffer.

**24.** A computer program comprising device or machine-readable instructions for configuring a computer to implement any one of the methods of claims 1 to 11.

**25.** A computer program comprising device or machine-readable instructions, said instructions translatable to implement any one of the methods of claims 1 to 11.

**26.** A carrier medium carrying a computer program according to claim 24 or 25.

*FIG. 1*

EP 1 073 251 A2

FIG. 2

FIG. 3

EP 1 073 251 A2

## FIG. 4

| API | | | | |
|---|---|---|---|---|
| NETWORK MANAGER **38a** | HOST PORT MANAGER **38b** | CHANNEL MANAGER **38c** | PACKET BUFFER MANAGER **40** | REAL-TIME KERNEL |

38

SIGNAL PROTOCOL STACK ~36s    DATA PROTOCOL STACK ~36d

30

| API | | | | |
|---|---|---|---|---|
| EMS PORT I/O **32a** | DSL CHANNEL I/O **32b** | ETHERNET I/O **32c** | HSSP I/O **32d** | |
| HARDWARE ABSTRACTION LAYER | | | | |

32

31

BASE    50

FIG. 5    50j

## FIG. 6

```
52 ──┐  ┌─────────────────────┐
      │  │  RECEIVING I/O DEVICE │
         │  RECEIVES PACKET     │
         └─────────────────────┘
                   │
                   ▼
         ┌─────────────────────┐
      54 │  RECEIVER DRIVER     │
         │  ALLOCATES PACKET    │
         │  BUFFER IN POOL 50   │
         │  AS RECEIVE QUEUE    │
         └─────────────────────┘
                   │
                   ▼
         ┌─────────────────────┐
      56 │  APPLICATION EXECUTES│
         │  NetPktRead OF       │
         │  PACKET BUFFER (i=1) │
         └─────────────────────┘
                   │
                   ▼
         ┌─────────────────────┐
      58 │  PROCESS PROTOCOL i  │
         │  BY MODIFYING HDR/TAIL│
         └─────────────────────┘
                   │
   ┌──────────┐    ▼                    59
60 │INCREMENT i│   ◇ MORE
   └──────────┘  YES◇ PROTOCOLS ◇
                    ◇    ?     ◇
                     │ NO
                     ▼
         ┌─────────────────────┐
      61 │ APPLICATION PROCESSING│
         └─────────────────────┘
                   │
                   ▼
         ┌─────────────────────┐
      62 │  APPLICATION EXECUTES│
         │  NetPktWrite OF      │
         │  PACKET BUFFER (i=m) │
         └─────────────────────┘
                   │
                   ▼
         ┌─────────────────────┐
      64 │  PROCESS PROTOCOL i  │
         │  BY MODIFYING HDR/TAIL│
         └─────────────────────┘
                   │
   ┌──────────┐    ▼
66 │DECREMENT i│   ◇ MORE
   └──────────┘  YES◇ PROTOCOLS ◇
                    ◇    ?     ◇  65
                     │ NO
                     ▼
         ┌─────────────────────┐
      68 │  TRANSMIT DRIVER USES│
         │  PACKET BUFFER AS    │
         │  XMIT QUEUE          │
         └─────────────────────┘
                   │
                   ▼
         ┌─────────────────────┐
      70 │  PACKET BUFFER IS    │
         │  FREED AND AUTO      │
         │  MERGED IN POOL 50   │
         └─────────────────────┘
```

FIG. 7

FIG. 8a

FIG. 8b

BASE

50

$\bullet PB_2$

$\bullet PB_0$

*FIG. 8c*

$\bullet PB_2$

OFFSET

(RESERVED)

*FIG. 9a*

SIZE=B_SIZE

D_OFFSET

PAYLOAD

D_SIZE

(RESERVED)

OFFSET+SIZE

WORD

$\bullet PB_2$

(RESERVED)

D_OFFSET

PH1

D_SIZE

PAYLOAD

*FIG. 9b*

(RESERVED)

*PB₂

| (RESERVED) |
| PH1 |
| |
| PT2 |
| (RESERVED) |

D_OFFSET

D_SIZE

*FIG. 9c*

*PB₂

| (RESERVED) |
| PH1 |
| PAYLOAD |
| (PT2) |
| (RESERVED) |

D_OFFSET

D_SIZE

*FIG. 9d*

*PB₂

| (RESERVED) |
| (PH1) |
| PAYLOAD |
| |
| (RESERVED) |

D_OFFSET

D_SIZE

*FIG. 9e*

*PB$_{0,0}$  *PB$_{1,0}$  *PB$_{2,0}$

*PB$_{0,1}$

*PB$_{0,2}$  *PB$_{1,1}$

*FIG. 10*